# EUROPÄISCHE PATENTSCHRIFT

(11) **EP 2 866 613 B1**
(45) Veröffentlichungstag und Bekanntmachung des Hinweises auf die Patenterteilung: **26.05.2021**
(21) Anmeldenummer: 13732922.3
(22) Anmeldetag: 28.06.2013
(51) Int. Cl.: A47C 1/024, A47C 1/032, A47C 1/034

(54) **ELEKTROMOTORISCHER MÖBELANTRIEB**
ELECTROMOTIVE FURNITURE DRIVE
ENTRAÎNEMENT DE MEUBLE À MOTEUR ÉLECTRIQUE

(30) Priorität: 28.06.2012 DE 102012105717
(43) Veröffentlichungstag der Anmeldung: 06.05.2015
(73) Patentinhaber: DewertOkin Technology Group Co., Ltd., Jiaxing City, Zhejiang Province (CN)
(72) Erfinder: FLAMME, Klaus-Peter, 86919 Utting (DE)
(74) Vertreter: Kleine, Hubertus
(86) Internationale Anmeldenummer: PCT/EP2013/063693
(87) Internationale Veröffentlichungsnummer: WO 2014/001533

(56) Entgegenhaltungen:
- EP-A1- 1 161 907
- WO-A1-2004/032684
- DE-A1-102005 033 629
- US-A1- 2011 018 331

## Beschreibung

Die Erfindung betrifft einen elektromotorischen Möbelantrieb mit einer Antriebseinheit und einer relativ zur Antriebseinheit bewegbaren Abtriebseinheit. Die Erfindung betrifft weiterhin ein Möbel, insbesondere ein Sitzmöbel, mit einem derartigen elektromotorischen Möbelantrieb.

Elektromotorische Möbelantriebe, im Folgenden abkürzend auch als Antriebe bezeichnet, werden in Liege- und Sitzmöbel eingebaut, um eine Verstellung von Möbelteilen wie Sitzen, Rückenlehnen, Fußbänken usw. relativ zu einem Grundkörper des Möbels und relativ zueinander komfortabel bewegen zu können. Verstellbare Sitzmöbel, insbesondere sogenannte Fernseh- oder Entspannungssessel, weisen dazu üblicherweise einen mechanisch relativ aufwändigen Möbelbeschlag auf, der im Zusammenwirken einer Vielzahl von Hebeln und Gestängen einen komplexen Bewegungsablauf der verschiedenen an ihm montierten Polstereinheiten ermöglicht.

Häufig weist ein solcher Sitzmöbelbeschlag, wie er beispielsweise in den Druckschriften US 2011/0198894 A1 und US 20111018331 A1 beschrieben ist, eine unterhalb der Sitzfläche angeordnete Traverse auf, die eine kombinierte Verschiebe- und Drehbewegung ausführt, wenn aus einer aufrechten Sitzposition heraus die Rückenlehne nach hinten verschwenkt und eine Fußstütze vor der Sitzfläche hochgeklappt wird. Die motorisierte Verstellung dieses Sitzmöbels erfolgt durch einen Antrieb, der in Sitzrichtung längs an einem Grundrahmen des Möbelbeschlags befestigt ist. Der Antrieb führt eine lineare Verschiebebewegung an einem Abtriebselement aus, die über Schwenkhebel als eine kombinierte Verschiebe-/Drehbewegung auf die zuvor beschriebene Traverse, im Folgenden Drehtraverse genannt, übertragen wird. Nachteilig ist dabei, dass der Antrieb eine relativ große, insbesondere lange, Bauform aufweist, die sich über die gesamte Länge des Grundrahmens des Möbelbeschlags erstreckt. Zudem ist ein langer Verschiebeweg des Abtriebselements gegenüber dem mit dem Grundrahmen verbundenen Grundelement des Antriebs notwendig. Beides führt zu einem material- und damit kostenaufwändigen Möbelantrieb. Zudem muss der Möbelbeschlag für den Einbau des Möbelantriebs modifiziert werden. Gegenüber einer üblicherweise ebenfalls im Handel erhältlichen unmotorisierten Version des Möbelbeschlags ist die Drehtraverse für den motorisierbaren Möbelbeschlag verstärkt ausgeführt und im Grundrahmen sind Montagemöglichkeiten für das Grundelement des Möbelantriebs vorzusehen. Dieses verteuert den Möbelbeschlag, nicht zuletzt durch die Notwendigkeit, zwei unterschiedliche Modelle herstellen und vorhalten zu müssen.

Prinzipiell für Sitz- oder Liegemöbel universell einsetzbare elektromotorische Antriebe sind beispielsweise aus den Druckschriften WO 2004/032684 A1 oder DE 10 2005 033 629 A1 bekannt. Bei diesen Antrieben wird über einen Spindelantrieb ein Hubrohr in bzw. aus einem Tragrohr verfahren. Hub- und Tragrohr sind an gegenüberliegenden Enden mit Gabelköpfen oder Querbohrungen versehen, über die eine Verbindung mit einem Möbelbeschlag mit im Wesentlichen punktueller Krafteinleitung erfolgen kann.

Eine besondere Bauform eines elektromotorischen Möbelantriebs zeigt die Druckschrift EP 1 161 907 A1. Bei diesem Antrieb sind an zwei Seiten des Antriebs Schwinghebelwerke angeordnet, bei denen Hebel scherenartig aufschwenken. Der Antrieb ist aufgrund seiner Bauform auf die Verwendung in ausgewählten Möbelbeschlägen einsetzbar.

Es ist eine Aufgabe der vorliegenden Erfindung, einen elektromotorischen Möbelantrieb der eingangs genannten Art zu schaffen, der für die Verwendung in einem Sitzmöbel, insbesondere einem Fernseh- oder Entspannungssessel, einsetzbar ist und der mit geringem Material- und damit Kostenaufwand herstellbar ist. Es ist eine weitere Aufgabe, den elektromotorischen Möbelantrieb so auszugestalten, dass eine Modifizierung des Möbelbeschlags zur Aufnahme des elektromotorischen Möbelantriebs nicht notwendig ist, sondern der elektromotorische Möbelantrieb vielmehr auch mit dem für manuelle Betätigung ausgelegten Möbelbeschlag einsetzbar ist.

Diese Aufgabe wird gelöst durch einen elektromotorischen Möbelantrieb mit den Merkmalen des Anspruches 1 und ein Möbel gemäß Anspruch 13.

Ein erfindungsgemäßer elektromotorischer Möbelantrieb weist eine Antriebseinheit und eine relativ zur Antriebseinheit bewegbare Abtriebseinheit auf, wobei an der Antriebseinheit und an der Abtriebseinheit je mindestens ein Verbindungselement angeordnet ist, über das die Antriebseinheit und die Abtriebseinheit jeweils mit einer Traverse oder einer Drehtraverse eines Möbelbeschlags verbindbar ist. Der elektromotorische Möbelantrieb zeichnet sich dadurch aus, dass die Verbindungselemente in einer Richtung quer zur Relativbewegung zwischen der Antriebseinheit und der Abtriebseinheit mindestens je zwei voneinander beabstandete Kraftangriffspunkte für die Verbindung mit dem Möbelbeschlag bereitstellen, wobei die Kraftangriffspunkte jeweils mindestens um einen Abstand voneinander beabstandet sind, der größer als etwa 50 % eines Verschiebewegs des Möbelantriebs ist, und dass die Verbindungselemente so ausgebildet sind, dass sie die Traverse hinsichtlich einer Biegung bzw. die Drehtraverse hinsichtlich einer Biegung und einer Torsion versteifen.

Durch die Verbindungselemente mit den beabstandeten Kraftangriffspunkten wird vom elektromotorischen Möbelantrieb Kraft zur Bewegung des Möbels nicht mittig und zentral an Komponenten des Möbelbeschlags aufgebracht sondern breiter auf diese Komponente verteilt. Der Möbelbeschlag braucht dadurch und durch die versteifende Wirkung der Verbindungselemente zur Verwendung mit dem Möbelantrieb nicht modifiziert werden, insbesondere ist eine zusätzliche Verstärkung der Komponenten des Möbelbeschlags, an dem der Möbelantrieb angreift, nicht notwendig. Als Verschiebeweg des Möbelantriebs ist im Rahmen der Anmeldung die Länge der maximal möglichen Verschiebebewegung des Möbelantriebs zu verstehen.

Die Verbindungselemente können dabei die Komponente des Möbelbeschlags punktuell oder auch über einen größeren linear oder flächig ausgedehnten Bereich kontaktieren. Ein Verbindungselement kann in diesem Sinne seinerseits mehrere Kraftangriffspunkte bereitstellen. Im Rahmen der Anmeldung relevant ist, dass mindestens zwei der Kraftangriffspunkte den angegebenen, relativ zum Verschiebeweg großen Abstand aufweisen, durch den sichergestellt wird, dass die Kraft insgesamt nicht zentral in einem Punkt konzentriert, sondern verteilt in die Komponente eingeleitet wird.

In einer bevorzugten Ausgestaltung des elektromotorischen Möbelantriebs ist dieser insbesondere geeignet für einen als Sitzmöbelbeschlag ausgebildeten Möbelbeschlag, wobei der Abstand der Kraftangriffspunkte jeweils größer als 25 % und insbesondere größer als 50 % einer Breite des Möbelbeschlags.

In einer weiteren bevorzugten Ausgestaltung des elektromotorischen Möbelantriebs ist der Abstand der Kraftangriffspunkte größer als 10 cm und insbesondere größer als 20 cm.

In einer weiteren bevorzugten Ausgestaltung des elektromotorischen Möbelantriebs ist die Verbindung zwischen der Antriebseinheit bzw. der Abtriebseinheit und dem Möbelbeschlag kraft- oder formschlüssig ausgeführt, bevorzugt lösbar und besonders bevorzugt ist die Verbindung schraubenlos. Im Gegensatz zu einer stoffschlüssigen Verbindung kann der Möbelantrieb bei einer solchen Verbindung einfach nachgerüstet werden.

In einer weiteren bevorzugten Ausgestaltung des elektromotorischen Möbelantriebs sind die Verbindungselemente zur Verbindung mit einer quer im Möbelbeschlag zwischen seitlichen Hebelwerken verlaufenden Traverse und/oder Drehtraverse ausgebildet. Bei einer Bewegung des Möbelbeschlags haben derartige Traversen und/oder Drehtraversen relativ zueinander eine Verschiebebewegung mit geringerem Verschiebeweg, als eine der Traversen gegenüber einem Grundrahmen des Möbelbeschlags hat. Ein nur an Traversen bzw. Drehtraversen angreifender Möbelantrieb kann somit mit kürzerem Verschiebeweg und damit besonders kompakt ausgebildet werden. Wiederum ist die Verbindung des Möbelantriebs mit der Traverse und/oder Drehtraverse bevorzugt lösbar und besonders bevorzugt schraubenlos, beispielsweise als eine Rast-, Schiebe- oder Clips-Verbindung, ausgeführt, wodurch der Möbelantrieb einfach nachgerüstet werden kann. Die Erfindung sieht in dieser Ausgestaltung somit vor, die jeweiligen Traverse oder die jeweilige Drehtraverse in Kontaktpunkten zu unterstützen, von denen mindestens zwei den angegebenen, relativ zum Verschiebeweg großen Abstand aufweisen. Dieses kann durch ein entsprechend langes Verbindungselement erreicht werden, aber auch durch zwei oder mehrere kürzere Verbindungselemente, von denen die äußeren den genannten größeren Abstand aufweisen. Die Traversen bzw. die Drehtraversen können so zur Krafteinleitung verwendet werden, auch wenn sie aufgrund ihrer Dimensionierung, z.B. ihres Durchmessers, ungeeignet wären, eine nur zentral eingebrachte Kraft zu übertragen, ohne sich übermäßig zu verbiegen oder zu verdrehen.

In einer weiteren bevorzugten Ausgestaltung des elektromotorischen Möbelantriebs sind zwei voneinander beabstandete Schwenkhebel als Verbindungselemente vorgesehen. Die Schwenkhebel können beispielsweise über Drehgelenke an Auslegern der Antriebseinheit angeordnet sein und mittels Spannriegeln drehfest mit einer Drehtraverse des Möbelbeschlags verbunden werden. Die Ausleger dienen dann dazu, den gewünschten Abstand der Schwenkhebel bereitzustellen. Die Drehgelenke ermöglichen eine kombinierte Translations- und Rotationsbewegung der Drehtraverse bei Betätigung des Möbelantriebs.

In einer weiteren bevorzugten Ausgestaltung weist der elektromotorische Möbelantrieb einen Motor auf, der über eine Schnecke auf eine drehbar gelagerte Spindelmutter wirkt, die dann mit einer drehfesten Spindel zusammenwirkt. Bevorzugt ist dabei die Spindelmutter zusammen mit mindestens einem Lager in einem Gehäuse der Abtriebseinheit angeordnet, wodurch sich ein kompakter Aufbau realisieren lässt.

Grundsätzlich kann der Möbelantrieb ein die Spindel komplett umschließendes Gehäuse aufweisen oder aber auch eine freiliegende Spindel haben. In einer weiteren bevorzugten Ausgestaltung ist lediglich eine Abdeckung vorgesehen, die die Spindel zumindest von zwei Seiten, bevorzugt von oben und unten, abdeckt. Eine solche Abdeckung anstelle eines umschließen Gehäuses ist kosten- und materialsparend ist und vereinfacht den Zusammenbau. Dennoch ist ein gewisser Schutz gegeben, beispielsweise gegenüber Fäden, die aus einem Sesselbezug herunterhängen und die sich in der Spindel verfangen könnten. In einer weiteren Ausgestaltung umgibt die Abdeckung die Spindel zumindest von drei Seiten, z.B. oben, unten und an einem Ende, u-förmig, wobei die Abdeckung einstückig mit integrierten Folienscharnieren ausgebildet ist.

Ein erfindungsgemäßes Möbel weist mindestens ein an einem Möbelbeschlag befestigtes bewegbares Möbelteil auf und ist mit einem zuvor beschriebenen elektromotorischen Möbelantrieb versehen. Bevorzugt ist das Möbel als Sitzmöbel und insbesondere als Entspannungssessel ausgestaltet.

Weitere vorteilhafte Ausgestaltungen und Weiterbildungen des Möbelantriebs sind in den abhängigen Ansprüchen angegeben.

Die Erfindung wird nachfolgend anhand von acht Figuren näher erläutert. Es zeigen:
- Fig. 1: eine perspektivische schematische Übersichtsdarstellung eines Möbelbeschlags für ein Sitzmöbel mit einem eingebauten Möbelantrieb;
- Fig. 2: eine perspektivische Darstellung eines Möbelantriebs in einem ersten Ausführungsbeispiel;
- Fig. 3: eine weitere perspektivische Darstellung des Möbelantriebs des ersten Ausführungsbeispiels ohne Abdeckung;
- Fig. 4: eine Draufsicht auf den Möbelantriebs des ersten Ausführungsbeispiels mit teilweise geöffneter Antriebseinheit;
- Fig. 5: eine perspektivische Darstellung eines Möbelantriebs in einem zweiten Ausführungsbeispiel;
- Fig. 6: eine Draufsicht auf den Möbelantriebs des zweiten Ausführungsbeispiels mit teilweise geöffneter Antriebseinheit;
- Fig. 7: verschiedene Ausgestaltungen von Verbindungselementen für eine kraft- oder formschlüssige drehbare Verbindung zwischen einem Möbelantrieb und einer Traverse eines Möbelbeschlags; und
- Fig. 8: eine Ausgestaltung einer kraft- oder formschlüssigen und drehfesten Verbindung zwischen einem Verbindungselement eines Möbelantriebs und einer Drehtraverse eines Möbelbeschlags.

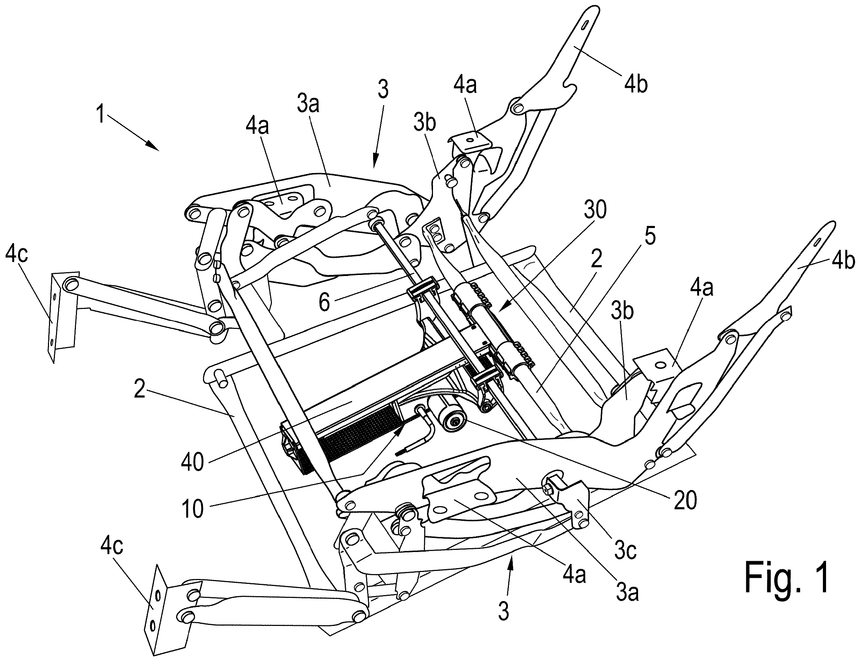

Fig. 1 zeigt in einer schematischen perspektivischen Darstellung einen Ausschnitt eines Möbelbeschlags 1 eines Entspannungssessels.

Der Möbelbeschlag 1 weist einen rechteckigen Grundrahmen 2 auf, der beim Einsatz des Möbelbeschlags 1 im Endprodukt im Wesentlichen parallel zum Boden ausgerichtet und relativ zu diesem beim Verstellen des Sessels unbeweglich ist. An Seiten des Grundrahmens 2 ist je ein Hebelwerk 3 mit einer Vielzahl von Hebeln und Gestängen angeordnet, von denen beispielhaft Hebel 3a, 3b, 3c und 3d mit Bezugszeichen versehen sind. Mit den Hebeln der beiden Hebelwerke 3 sind Anschlusselemente 4a, 4b, 4c verbunden, beispielsweise Laschen oder Winkel, die die verschiedenen Polsterelemente des Sessels, beispielsweise eine Sitzfläche, eine Rückenlehne und eine Fußstütze, tragen. Dabei dienen die Anschlusselemente 4a zur Befestigung der Sitzfläche, die Anschlusselemente 4b tragen die Rückenlehne und die Anschlusselemente 4c die Fußstütze. Die Hebelwerke 3 ermöglichen einen komplexen Bewegungsablauf dieser Polsterelemente zueinander.

Zwischen den Hebelwerken 3 auf einer und auf der anderen Seite des Grundrahmens 2 verlaufen mehrere Quertraversen, von denen eine Traverse 5 und eine Drehtraverse 6 im Rahmen der Anmeldung Bedeutung haben und durch entsprechende Bezugszeichen hervorgehoben sind. Diese Traverse 5 und die Drehtraverse 6 dienen ebenso wie weitere vorhandene Traversen der Stabilisierung des Möbelbeschlags und der gleichmäßigen Bewegung der Hebel beider Hebelwerke 3 auf den beiden Seiten des Möbelbeschlags 1.

Die Drehtraverse 6 vollführt bei einer Bewegungssequenz des Sessels von einer aufrechten Sitzposition über eine Position mit angehobener Fußstütze zu einer Liegeposition mit abgesenkter Rückenlehne gegenüber dem Grundrahmen 2 sowohl eine Verschiebe- als auch eine Drehbewegung.

In einer ersten Bewegungsphase wird dabei die Drehtraverse 6 ohne eine nennenswerte Verschiebung verschwenkt, wodurch die Fußstütze ausfährt. Die Drehbewegung der Drehtraverse 6 wird dabei von dem Hebel 3c (vgl. Fig. 1) über weitere Hebel und Gestänge auf die Anschlusselemente 4c und damit die Fußstütze übertragen. Die Drehbewegung der Drehtraverse 6 wird dann durch einen Anschlag gestoppt, woraufhin in einer zweiten Bewegungsphase im Wesentlichen nur noch eine Verschiebebewegung der Drehtraverse 6 erfolgt. Diese führt zu einer Bewegung der Hebel 3a und 3b relativ zueinander damit zum Einen zu einer leichten Absenkung des hinteren Teils der Sitzfläche und zum Anderen zu einer Verschwenkung der Rückenlehne.

Die Traverse 5 vollführt bei der genannten Bewegungssequenz ebenfalls eine Verschiebebewegung, mit jedoch vernachlässigbarer Drehbewegung. Sowohl die Traverse 5, als auch die Drehtraverse 6 bewegen sich beim Ablauf der genannten Bewegungssequenz gegenüber dem Grundrahmen 2 im Wesentlichen in die gleiche Richtung, dieses jedoch mit unterschiedlichen Vorschubgeschwindigkeiten. Dadurch ergibt es sich, dass die Drehtraverse 6 nicht nur eine Relativbewegung gegenüber dem Grundrahmen 2, sondern auch gegenüber der Traverse 5 vollführt.

Dieses macht sich die Erfindung zunutze, indem sie einen Möbelantrieb zum motorisierten Verfahren des Möbelbeschlags 1 einsetzt, der zum Einen an der Traverse 5 und zum Anderen an der Drehtraverse 6 angreift, ohne dass der Möbelantrieb mit einer seiner Komponenten ortsfest zum oder am Grundrahmen 2 befestigt wäre. Im dargestellten Beispiel umfasst der Möbelantrieb eine Antriebseinheit 10, die mit der Drehtraverse 6 verbunden ist und eine Abtriebseinheit 30, die mit der Traverse 5 verbunden ist. Vorteilhaft resultiert aus dem Ansetzen des Möbelantriebs nur an die Traverse 5 und die Drehtraverse 6 ein geringerer Verschiebeweg und eine kompaktere Ausführung des Möbelantriebs verglichen mit einem sich über die gesamte Länge des Grundrahmens 2 erstreckenden Antrieb.

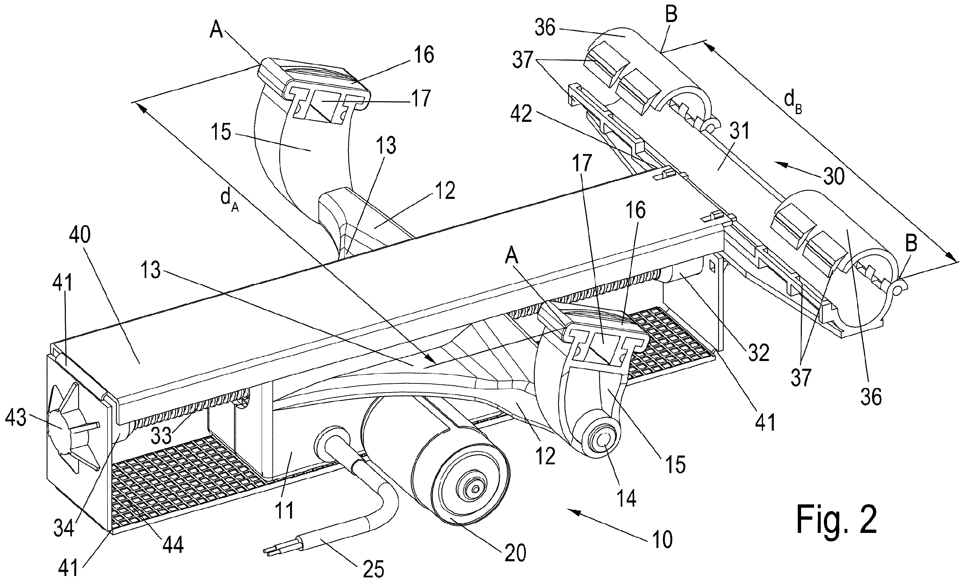

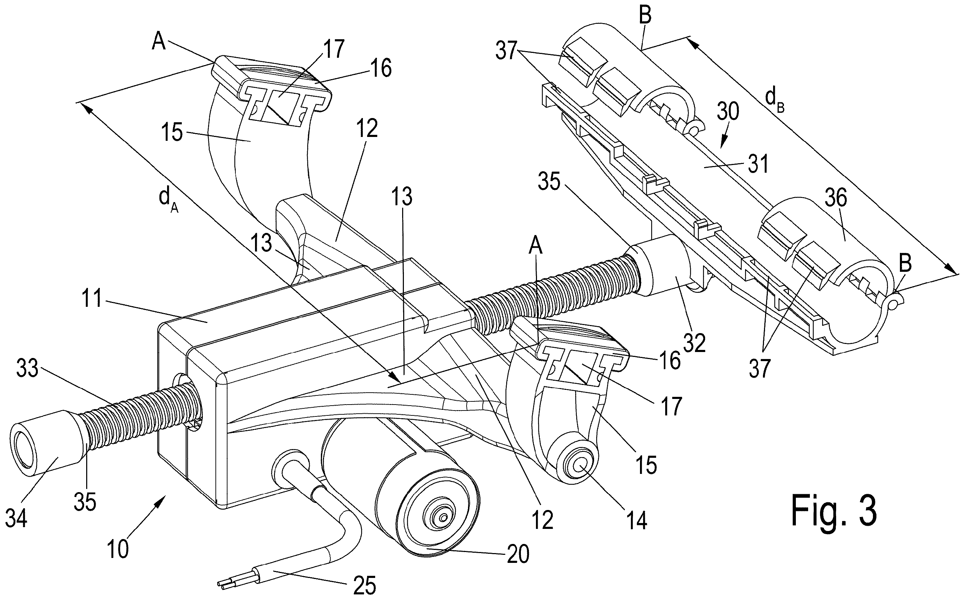

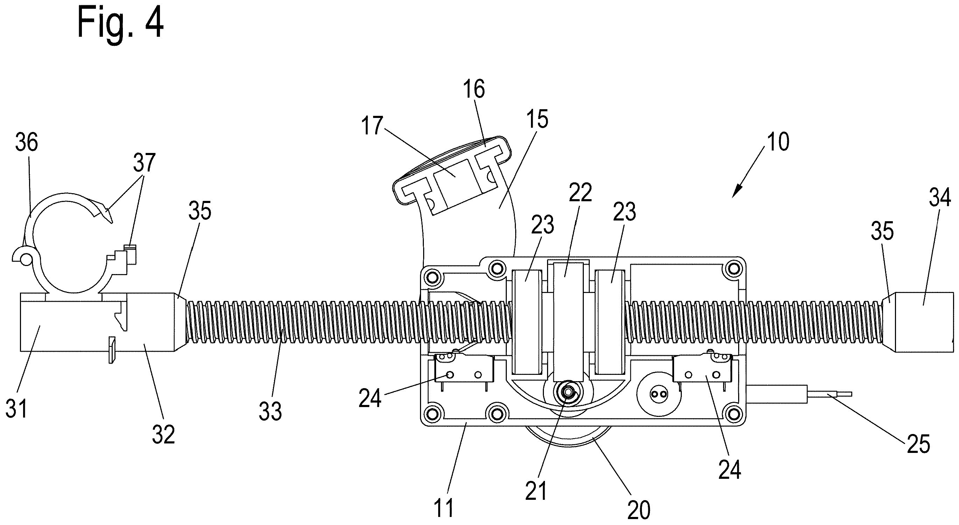

Die Fig. 2 und 3 zeigen den Möbelantrieb aus Fig. 1 in perspektivischen schematischen Darstellungen detaillierter. Gegenüber Fig. 2 ist in Fig. 3 eine optionale Abdeckung entfernt. Fig. 4 zeigt den Möbelantrieb - ebenfalls ohne die Abdeckungen - in einer Seitenansicht. In Fig. 4 ist die Antriebseinheit 10 teilweise geöffnet dargestellt, um Einblick in ihren inneren Aufbau zu geben.

Wie zuvor beschrieben weist der Möbelantrieb die Antriebseinheit 10 und die Abtriebseinheit 30 auf, die entlang einer Verschieberichtung gegeneinander verfahrbar sind.

Die Antriebseinheit 10 umfasst ein Gehäuse 11, an dem gegenüberliegende, seitlich herausragende Ausleger 12 angeordnet sind, wobei zur Verstärkung der Ausleger 12 Verstrebungen 13 vorgesehen sind. Das Gehäuse 11 ist hier aus zwei Halbschalen gebildet. Jede der Halbschalen ist bevorzugt einstückig mit dem jeweiligen Ausleger 12 und der Verstrebung 13 ausgebildet, beispielsweise als Kunststoffspritzgussteil. An einer der Halbschalen sind ein Flansch zur Montage eines Motors 20 sowie eine Durchführung für ein Kabel 21 angeordnet. Davon abgesehen können beide Halbschalen von außen aus gesehen spiegelsymmetrisch sein.

Mit jedem der Ausleger 12 ist am jeweiligen äußeren Ende über ein Drehgelenk 14 je ein Schwenkhebel 15 schwenkbar verbunden. Die Schwenkhebel 15 sind an ihrem jeweiligen freien Ende so profiliert, dass ein Spannriegel 16 aufschiebbar ist, der zusammen mit dem Schwenkhebel eine Vierkantaufnahme für die Drehtraverse 5 des Möbelbeschlags 1 bildet. Schwenkhebel 15 und Spannriegel 16 stellen also in Kombination ein Verbindungselement zur Verbindung des Möbelantriebs mit dem Möbelbeschlag 1 dar. Die Verbindung ist formschlüssig und aufgrund der vierkantigen Ausführung der Drehtraverse 6 und der ebenfalls vierkantigen Aufnahme für diese auch drehfest und geeignet, um Drehmomente zu übertragen. In den gezeigten Ausführungsbeispielen ist die Drehtraverse 6 in Form einer als Vierkantwelle ausgebildeten durchgehenden Profilwelle gezeigt. Prinzipiell kann jede Art einer Profilierung der Drehtraverse 6 verwendet werden, wobei das Verbindungselement dieser Profilierung angepasst ist.

In Richtung der Drehtraverse 6, also senkrecht zur Verschieberichtung des Abtriebseinheit 30 gegenüber der Antriebseinheit 10, sind Schwenkhebel 15 bzw. die Spannriegel 16 als Verbindungselemente zum Möbelbeschlag 1 um einen Abstand d_{A} voneinander beabstandet. Auf die Drehtraverse 6 wirkt der Möbelantrieb somit an zwei voneinander beabstandeten Krafteinleitungspunkten A ein.

Die Abtriebseinheit 30 umfasst eine Querstrebe 31, in der mittig eine Spindelaufnahme 32 eingearbeitet ist. In diese ist drehfest eine Spindel 33 eingesetzt. Am freien Ende der Spindel 33 ist eine Endmutter 34 ebenfalls drehfest aufgesetzt. Die Spindelaufnahme 32 und die Endmutter 34 sind an den zueinander weisenden Seiten mit einer Schaltschräge 35 versehen. Alternativ kann an Stelle der Endmutter 34 ein Formteil mit einer Schaltschräge 35 vorgesehen sein, wobei das Formteil fest auf die Spindel 33 aufgesetzt ist.

Wie insbesondere aus Fig. 4 ersichtlich ist, verläuft die Spindel 33 mittig durch das Gehäuse 11 der Antriebseinheit 10. Im Gehäuse 11 ist eine Spindelmutter 22 mittels zweier Lager 23 drehbar gelagert. Die Spindelmutter 22 wirkt dabei mit dem Motor 20 zusammen, beispielsweise indem die Spindelmutter 22 mit einer Außenverzahnung versehen ist, in die eine Schnecke 21 eingreift, die auf einer Drehachse des Motors 20 sitzt.

Die Spindelmutter 22 wirkt mit der Spindel 33 so zusammen, dass bei Betätigung des Motors 20 die Abtriebseinheit 30 relativ zur Antriebseinheit 10 verfährt. Der Möbelantrieb ist somit als ein Linearantrieb ausgebildet. Die Verbindung mit der Traverse 5 und der Drehtraverse 6 stellt dabei sicher, dass sich die Antriebseinheit 10 und die Abtriebseinheit 30 nicht gegeneinander verdrehen.

Im Gehäuse 11 der Antriebseinheit 10 sind Endschalter 24 angeordnet, die mit den Schaltschrägen 35 der Spindelaufnahme 32 bzw. der Endmutter 34 zusammenwirken. Über eine entsprechende Verschaltung der Endschalter 34 mit dem Motor 20 wird verhindert, dass die Abtriebseinheit 30 gegen einen mechanischen Anschlag fährt. Der Motor 20 kann zusätzlich zur dargestellten Schnecke 21 mit einem Drehzahlreduziergetriebe versehen sein.

In ihrer Längsrichtung, also quer zur Verschieberichtung der Abtriebseinheit 30 zur Antriebseinheit 10 weist die Querstrebe 31 einen Querschnitt mit einer halbkreisförmigen Ausnehmung auf. In diese Ausnehmung wird die Traverse 5 des Möbelbeschlags 1 eingelegt. An beiden Enden der Querstrebe 31 sind halbschalenförmige Klammern 36 vorgesehen, die die Traverse 5 umgreifen können. Die Querstrebe 31 weist ebenso wie die halbschalenförmigen Klammern 36 ineinander eingreifende Rastmittel auf, so dass eine umgriffene Traverse 5 in Verschieberichtung in Richtung der von dem Möbelantrieb aufgebrachten Kraft formschlüssig mit der Querstrebe 31 verbunden ist. Dabei kann vorgesehen sein, dass die Klammern 36 durch umgelegte Kabelbinder verstärkt werden. Zu diesem Zweck können in die Querstrebe 31 entsprechende Führungen für die Kabelbinder eingearbeitet sein. Die Querstrebe 31 stellt mit den beiden Klammern 36 um einen Abstand d_{B} beabstandete Krafteinleitungspunkte B bereit, in denen die Abtriebseinheit 30 Kraft auf die Traverse 5 ausübt. Auch auf die Traverse 5 wirkt der Möbelantrieb somit an zwei voneinander entsprechend weit beabstandeten Krafteinleitungspunkten ein.

Beim Betrieb des elektromotorischen Möbelantriebs verfährt die Abtriebseinheit 30 relativ zur Antriebseinheit 10. Diese Linearbewegung der Abtriebseinheit 30 gegenüber der Antriebseinheit 10 führt durch die Schwenkhebel 15 zu einer kombinierten linearen Verschiebe- und Drehbewegung der Drehtraverse 6 gegenüber der Traverse 5. Durch die um die Abstände d_{A} bzw. d_{B} beabstandeten Krafteinleitungspunkte an der Drehtraverse 6 und der Traverse 5 wird ein Verbiegen dieser Komponenten des Möbelbeschlags 1 verhindert bzw. reduziert. Im Unterschied zu aus dem Stand der Technik bekannten Antriebseinheiten für derartige Möbelbeschläge erfolgt eine Kraftübertragung auf die Drehtraverse 6 nicht im Wesentlichen mittig, sondern in einem äußeren Bereich der Drehtraverse 6. Diese braucht daher nicht gesondert verstärkt zu werden. Gleiches gilt für die Traverse 5, die bei einer nur mittigen Krafteinleitung gegebenenfalls der Druck- oder. Zugbelastung bzw. der Biegebelastung nicht standhalten würde.

Durch ihre Ausgestaltung versteifen die beabstandeten Schwenkhebel 15 bzw. die Spannriegel 16 als Verbindungselemente die Drehtraverse 6 und die Querstrebe 31 bzw. die Klammern 36 als Verbindungselemente die Traverse 5, also einzelne Bauteile oder einzelne Bauteilabschnitte des Möbelbeschlages 1, die andernfalls einer Motorisierung des Möbelbeschlags 1 nicht standhalten würden. Somit werden Biegespannungen und/oder Torsionsspannungen von einzelnen Bauteilen oder von Bauteilabschnitten des Funktionsbeschlages reduziert, ohne dass der Möbelbeschlag 1 verändert wird.

Die Verbindungselemente versteifen somit in gewisser Weise die Traverse 5 hinsichtlich Biegung bzw. die Drehtraverse 6 hinsichtlich Biegung bzw. Torsion. In den erläuterten Ausführungen sind die Verbindungselemente ein Teil des Möbelantriebs bzw. weist der Möbelantrieb Teile der Verbindungselemente auf. Alternativ können Verbindungselemente mit dem Möbelantrieb verbindbar ausgebildet sein. Solche Verbindungen sind dann z.B. als feste oder alternativ als gelenkige Verbindungen ausgeführt.

Dadurch, dass der Möbelantrieb 10 nur über die Traverse 4 und die Drehtraverse 5 getragen wird, brauchen im Grundrahmen 2 keinerlei Befestigungsmöglichkeiten für den Möbelantrieb 10 vorgesehen sein. Damit kann ein für die manuelle Betätigung ausgelegter Möbelbeschlag 1 als Basis für ein motorbetriebenes Möbel eingesetzt werden.

Um eine Durchbiegung auf ein unkritisches Niveau zu reduzieren und damit Beschädigung der Traverse 5 und der Drehtraverse 6 wirksam zu verhindern, sollten die Abstände d_{A} und d_{B} so groß gewählt sein, dass sie mindestens 25 % der Breite der Traverse 5 bzw. der Drehtraverse 6 betragen. Da diese im Bereich typischer Sesselbreiten von 40 bis 60 cm liegt, sollten die Abstände d_{A} und d_{B} im Bereich von etwa 10 cm oder mehr liegen. Wie zuvor beschrieben, resultiert aus dem Ansetzen des Möbelantriebs an die Traverse 5 und die Drehtraverse 6 ein geringer Verschiebeweg des Möbelantriebs. Darauf bezogen betragen erfindungsgemäß die Abstände d_{A} und d_{B} mehr als etwa 50% des Verschiebewegs.

In dem in den Fig. 1 bis 4 dargestellten Ausführungsbeispiel sind eine feststehende Spindel 33 und eine drehbewegte Spindelmutter 22 vorgesehen. Es ist jedoch selbstverständlich ebenso möglich, eine Relativbewegung zwischen der Antriebseinheit 10 und der Abtriebseinheit 30 zu realisieren, indem die Spindel drehbewegt wird und die Spindelmutter feststehend ausgeführt ist. Grundsätzlich sind auch andere Antriebe als die über eine Spindel und eine Spindelmutter für den anmeldungsgemäßen Möbelantrieb möglich.

In einer alternativen Ausgestaltung des Möbelantriebs kann anstelle einer linear verfahrenden Abtriebseinheit auch ein rotierendes Abtriebsglied vorgesehen sein.

Grundsätzlich kann der Möbelantrieb ohne ein die Spindel 33 umschließendes Gehäuse aufgebaut werden, was kosten- und materialsparend ist und den Zusammenbau vereinfacht. Der Möbelantrieb kann beispielsweise ohne Weiteres in der in den Fig. 3 und 4 dargestellten Form eingesetzt werden. In dem Fall kann die Baulänge und der Verschiebeweg einfach durch Auswahl einer entsprechend langen Spindel variiert werden. Alternativ kann jedoch, wie in Fig. 2 gezeigt, eine Abdeckung 40 vorgesehen sein, die die Spindel 33 zumindest nach oben und unten hin abdeckt und beispielsweise gegenüber Fäden schützt, die aus dem Sesselbezug herunterhängen und die sich in der Spindel verfangen könnten. Diese Abdeckung 40 ist im dargestellten Ausführungsbeispiel ein einstückiges Kunststoffteil, dessen verschiedene Seiten durch Folienscharniere 41 miteinander verbunden sind. An den Enden sind Rastmittel 42 angeordnet, die mit entsprechenden Gegenrastmitteln der Querstrebe 31 zusammenwirken. In einem dem Querträger 31 gegenüberliegenden Kopfteil ist eine topfförmige Aufnahme 43 eingearbeitet, die über die Endmutter 34 der Spindel 33 gestülpt ist. Die Innenseite der unter der Spindel liegenden Seite der Abdeckung 40 ist mit Einprägungen 44 versehen, die eventuell aus der Antriebseinheit 10 austretendes Schmiermittel aufnehmen können und so einer Verschmutzung des Bodens unter dem Sessel vorbeugen.

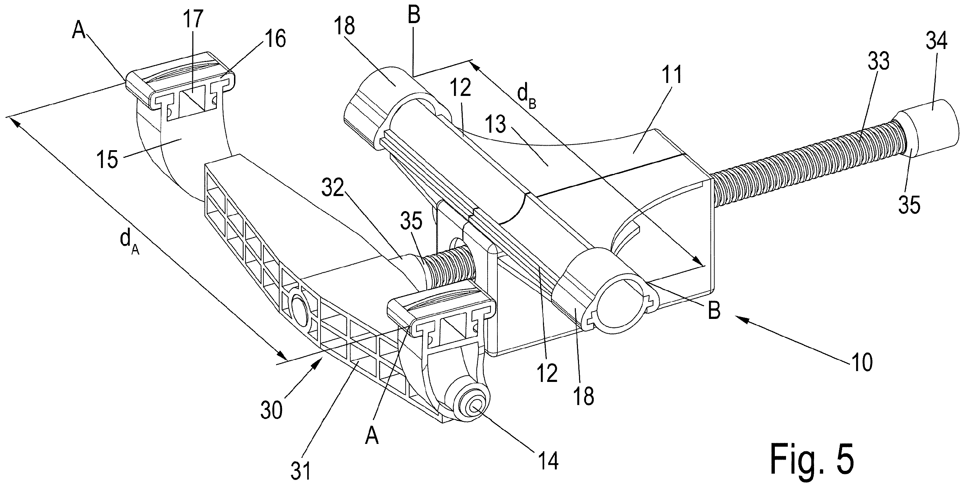

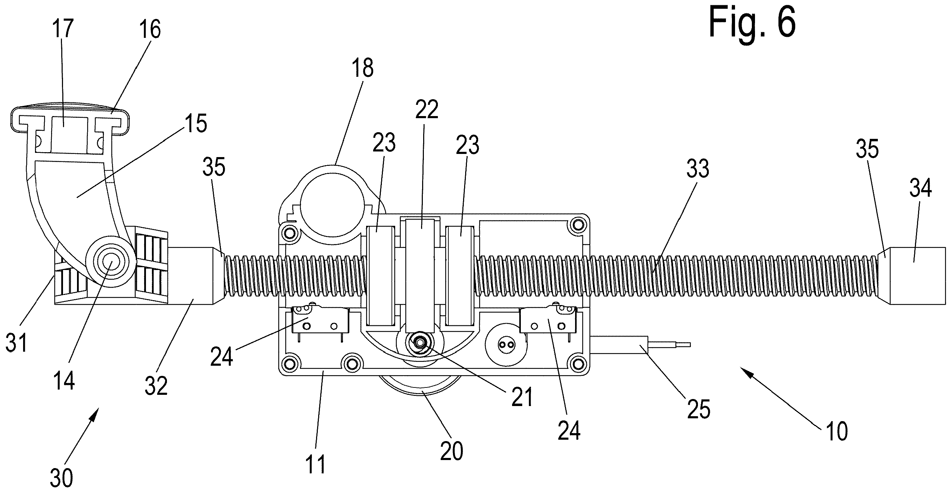

In den Fig. 5 und 6 ist ein zweites Ausführungsbeispiel eines Möbelantriebs dargestellt. Gleiche Bezugszeichen kennzeichnen in diesen Figuren gleiche oder gleich wirkende Elemente wie in den vorangehenden Figuren. Fig. 5 zeigt den Möbelantrieb in einer perspektivischen schematischen Darstellung, Fig. 6 gibt ihn analog zu Fig. 4 in einer Draufsicht mit teilweise geöffneter Antriebseinheit wieder, um Einblick in den inneren Aufbau zu geben.

Vom grundsätzlichen Aufbau entspricht der Möbelantrieb in diesem zweiten Ausführungsbeispiel dem des ersten Ausführungsbeispiels, auf dessen Beschreibung hiermit verwiesen wird. Er kann ebenso bei dem in Fig. 1 gezeigten Möbelbeschlag 1 verwendet werden.

Wiederum weist der Möbelantrieb eine Antriebseinheit 10 und eine Abtriebseinheit 30 auf. Im Unterschied zum ersten Beispiel ist hier die Antriebseinheit 10 zur Befestigung an der runden Traverse 5 und die Abtriebseinheit 30 zur Befestigung an der Vierkant-Drehtraverse 6 eingerichtet. Dazu sind Schwenkarme 15 über Drehgelenke 14 an einer Querstrebe 31 der Abtriebseinheit 30 befestigt. Die Antriebseinheit 10 umfasst wiederum ein Gehäuse 10 mit Auslegern 12, die hier mit einer trogartigen Ausnehmung mit halbkreisförmigem Querschnitt versehen sind, in die die Traverse 5 des Möbelbeschlags 1 eingelegt wird. An den Enden der Ausleger 12 sind halbschalenförmige Riegel 18 vorgesehen, die auf die Ausleger 12 geschoben werden und die Traverse 5 umgreifen können. Die Riegel 18 und die Ausleger 12 sind entsprechend geformt, um eine formschlüssige Verbindung zu gewährleisten. Bezüglich des Aufbaus der Antriebseinheit 10 im Inneren des Gehäuses 11 und insbesondere bezüglich des Zusammenwirkens von Spindel 33 und Spindelmutter 22 sowie des Motors 20 wird auf die Ausführungen zum ersten Ausführungsbeispiel verwiesen.

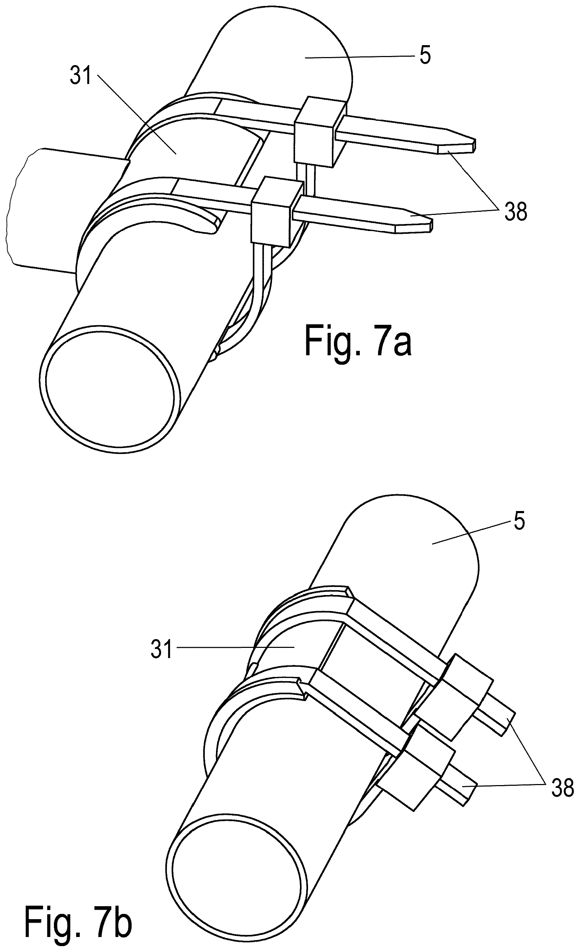

In den Figuren 7a bis 7d sind jeweils verschiedene Möglichkeiten gezeigt, um eine drehbare, aber quer zur Längsrichtung der Traverse 5 kraftübertragende Verbindung von einem Verbindungselement des Möbelantriebs zu der Traverse 5 zu realisieren. Gleiche Bezugszeichen kennzeichnen in diesen und in den folgenden Figuren wiederum gleiche oder gleich wirkende Elemente wie in den vorangehenden Figuren.

Die in den Figuren 7a bis 7c dargestellten Lösungen zeichnen sich dadurch aus, dass die Traverse 5 in keiner Weise vorbereitet oder modifiziert werden muss, um den Möbelantrieb zu befestigen. Entsprechend eignen sich diese Lösungen auch gut für einen nachträglichen Einbau des elektromotorischen Möbelantriebs.

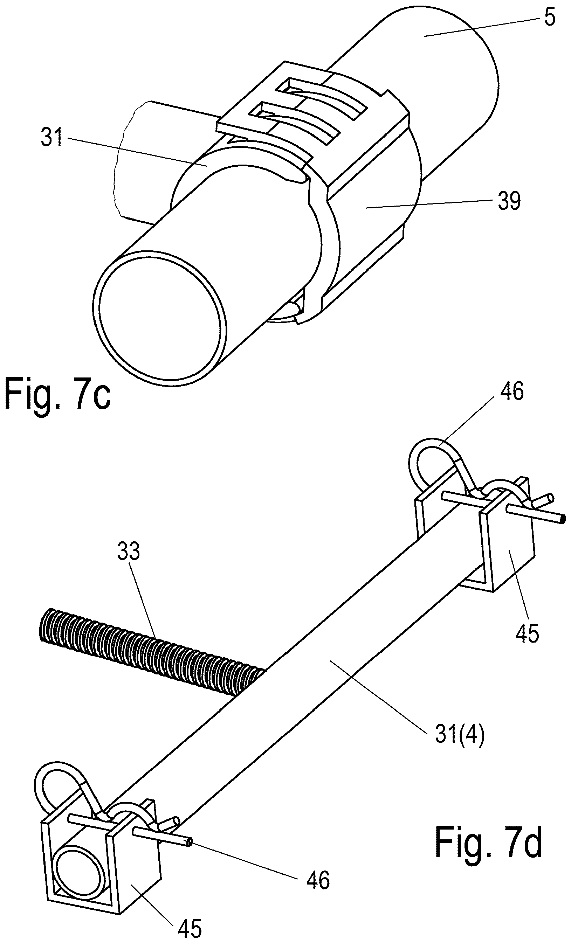

Gemäß der in den Figuren 7a und 7b dargestellten Lösungen ist das Verbindungselement, beispielsweise der Querträger 31, an seinen Enden, von denen hier jeweils nur eines dargestellt ist, halbschalenförmige ausgebildet und wird mit Kabelbindern 38 an der Traverse 4 festgelegt. Die halbschalenförmige Aufnahme des Verbindungselements kann mit etwas größerer Materialstärke wie in Figur 7a gezeigt aus Kunststoff gefertigt sein oder auch wie in Figur 7c dargestellt, mit geringerer Materialstärke aus Metall.

Figur 7c stellt eine ähnliche Lösung mit einer halbschalenförmigen Aufnahme dar, die mit in dieser Figur nicht sichtbaren Rastnasen versehen ist, die mit einem von der offenen Seite der halbschalenförmigen Aufnahme her aufgesetzten Clip 39 verrasten.

In Figur 7d ist eine Querstrebe 31 als Verbindungselement eines Möbelantriebs 10 dargestellt, die gleich einer Traverse 5 ausgebildet ist. Ein derartiger Antrieb kann eingesetzt werden, wenn der Möbelbeschlag 1 zwar eine Drehtraverse 6, jedoch keine geeignete oder geeignet positionierte Traverse 5 bereitstellt. In diesem Fall werden am Hebelwerk 3 (in der Figur 7d nicht sichtbar) u-förmige Klammern 45 montiert, in die die Querstrebe 31 als Traverse 5 eingesetzt wird und mit Sicherungselementen, beispielsweise den gezeigten Federsplinten 46, gesichert wird.

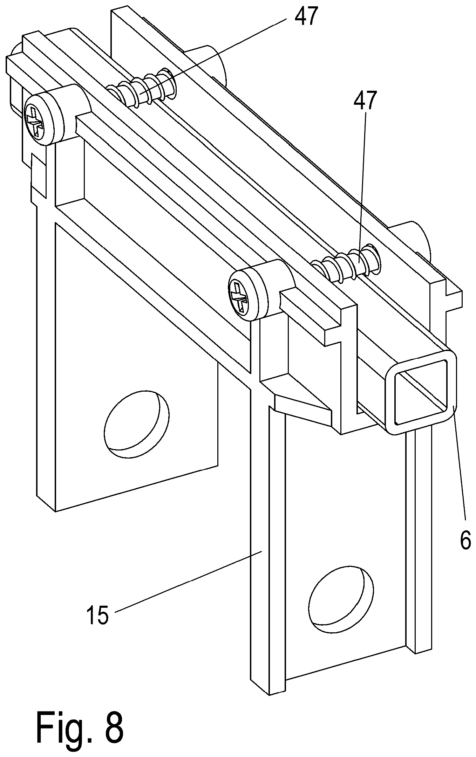

In Figur 8 ist eine alternative Ausgestaltung eines Schwenkhebels 15 dargestellt, der wiederum drehfest mit einer Drehtraverse 6 verbunden ist. In der dargestellten Ausführungsform kann der Schwenkhebel 15 beispielsweise ein Kunststoffspritzgussteil sein, das eine trogförmige Aufnahme für die Drehtraverse 6 bereitstellt. Nach Einlegen der Drehtraverse 6 in die trogförmige Aufnahme wird die Drehtraverse 6 durch am oberen Ende des Troges quer verlaufende Schrauben 47 gesichert und die Drehtraverse 5 zusätzlich im Trog festgeklemmt.

Es sei noch darauf hingewiesen, dass der Möbelantrieb und zumindest die Verbindungselemente gemäß den Ausführungen nach den Figuren 1 bis 6 in erfinderischer Weise zum Einsatz in einen Möbelbeschlag 1 ausgebildet sind, wobei der Möbelbeschlag 1 in keiner Weise dafür vorbereitet oder modifiziert werden muss. Somit kann noch kurz vor Beendigung des Fertigungsprozesses des Möbels oder mit der Auslieferung des Möbels an den Endverbraucher der Möbelantrieb in das Möbel eingesetzt werden. In vorteilhafter Weise kann auch der Möbelantrieb einige Zeit nach der Auslieferung in den Möbelbeschlag 1 eingesetzt werden, wenn sich der Endverbraucher nachträglich für eine Motorisierung des Möbels entscheidet. Dazu sind erfindungsgemäß die Verbindungselemente zur einfachen Verbindung des Möbelantriebs mit der Traverse 5 und mit der Drehtraverse 6 ausgebildet, während sie zugleich eine Stabilisierung dieser herbeiführen, indem der Abstand d_{A} bzw. d_{B} wenigstens 25% der Breite des Sessels oder des Abstandes der Hebelwerke 3 beträgt.

Ferner sind eine Anzahl beabstandete Kraftangriffspunkte A, B oder beabstandete Kraftangriffsbereiche A, B durch eine Anzahl Verbindungselemente bereitgestellt, welche sich in einer Richtung quer zur Relativbewegung zwischen der Antriebseinheit 10 und der Abtriebseinheit 30 entlang der Traverse 5 oder entlang der Drehtraverse 6 erstrecken. Der Abstand der Kraftangriffspunkte bzw. der Kraftangriffsbereiche A bzw. B ist durch das Maß d_{A} bzw. d_{B} gebildet. Das Maß d_{A} bzw. d_{B} beträgt in einer Ausführungsform mehr als 25% des Verschiebeweges des Möbelantriebes. In einer weiteren Ausführungsform beträgt das Maß d_{A} bzw. d_{B} mehr als 25% des Abstandes der Hebelwerke 3.

### Bezugszeichenliste

- 1: Möbelbeschlag
- 2: Grundrahmen
- 3: Hebelwerk
- 3a-d: Hebel
- 4a-c: Anschlusselemente
- 5: Traverse
- 6: Drehtraverse

- 10: Antriebseinheit
- 11: Gehäuse
- 12: Ausleger
- 13: Verstrebung
- 14: Drehgelenk
- 15: Schwenkhebel
- 16: Spannriegel
- 17: Vierkantaufnahme
- 18: Riegel

- 20: Motor
- 21: Schnecke
- 22: Spindelmutter
- 23: Lager
- 24: Endschalter
- 25: Anschlusskabel

- 30: Abtriebseinheit
- 31: Querstrebe
- 32: Spindelaufnahme
- 33: Spindel
- 34: Endmutter
- 35: Schaltschräge
- 36: halbschalenförmige Klammer
- 37: Rastmittel
- 38: Kabelbinder
- 39: Clip

- 40: Abdeckung
- 41: Filmscharnier
- 42: Rastmittel
- 43: Aufnahme
- 44: Einprägung
- 45: u-förmiger Winkel
- 46: Federsplint
- 47: Schraube

- d_{A}, d_{B}: Abstand

## Patentansprüche

1. Elektromotorischer Möbelantrieb mit einer Antriebseinheit (10) und einer relativ zur Antriebseinheit (10) bewegbaren Abtriebseinheit (30), wobei der elektromotorische Möbelantrieb weiter mindestens zwei Verbindungselemente aufweist, von denen je mindestens eines an der Antriebseinheit (10) und an der bewegbaren Abtriebseinheit (30) angeordnet ist, über das die Antriebseinheit (10) und die bewegbare Abtriebseinheit (30) jeweils mit einer Traverse (5) oder einer Drehtraverse (6) eines Möbelbeschlags (1) verbindbar ist, **dadurch gekennzeichnet, dass** die Verbindungselemente in einer Richtung quer zur Relativbewegung zwischen der Antriebseinheit (10) und der bewegbaren Abtriebseinheit (30) mindestens je zwei voneinander beabstandete Kraftangriffspunkte (A, B) für die Verbindung mit dem Möbelbeschlag (1) bereitstellen, wobei die Kraftangriffspunkte (A, B) jeweils mindestens um einen Abstand (d_{A}, d_{B}) voneinander beabstandet sind, der größer als etwa 50 % eines Verschiebewegs des Möbelantriebs ist, und dass die Verbindungselemente so ausgebildet sind, dass sie die Traverse (5) hinsichtlich einer Biegung bzw. die Drehtraverse (6) hinsichtlich einer Biegung und einer Torsion versteifen, wobei der Verschiebeweg des Möbelantriebs einer Länge einer maximalen Verschiebung des Möbelantriebs entspricht.

2. Elektromotorischer Möbelantrieb nach Anspruch 1, bei dem der Abstand (d_{A}, d_{B}) der Kraftangriffspunkte (A, B) größer als 10 cm und insbesondere größer als 20 cm ist.

3. Elektromotorischer Möbelantrieb nach Anspruch 1 oder 2, bei dem die Verbindung zwischen der Antriebseinheit (10) bzw. der Abtriebseinheit (30) und dem Möbelbeschlag (1) kraft- oder formschlüssig ist.

4. Elektromotorischer Möbelantrieb nach Anspruch 3, bei dem die Verbindungselemente eine lösbare, insbesondere schraubenlose Verbindung bereitstellen.

5. Elektromotorischer Möbelantrieb nach Anspruch 4, bei dem eines der Verbindungselemente als eine Quertraverse (31) der Abtriebseinheit (30) ausgebildet ist, wobei beabstandete halbschalenförmige Klammern (36) oder Clips (39) und/oder Kabelbinder (38) zur Verbindung mit der Traverse (5) des Möbelbeschlags (1) vorgesehen sind.

6. Elektromotorischer Möbelantrieb nach Anspruch 4 oder 5, bei dem zwei beabstandete Schwenkhebel (15) als Verbindungselemente vorgesehen sind.

7. Elektromotorischer Möbelantrieb nach Anspruch 6, bei dem die Schwenkhebel (15) mittels Spannriegel (16) drehfest mit der Drehtraverse (6) des Möbelbeschlags (1) verbindbar sind.

8. Elektromotorischer Möbelantrieb nach Anspruch 6 oder 7, bei dem die Schwenkhebel (15) über Drehgelenke (14) an Auslegern (12) der Antriebseinheit (10) angeordnet sind.

9. Elektromotorischer Möbelantrieb nach Anspruch 6 oder 7, bei dem die Schwenkhebel (15) über Drehgelenke (14) an einer Quertraverse (31) der Abtriebseinheit (30) angeordnet sind.

10. Elektromotorischer Möbelantrieb nach einem der Ansprüche 1 bis 9, bei dem die Antriebseinheit (10) einen Motor (20) aufweist, der über eine Schnecke (21) auf eine drehbar gelagerte Spindelmutter (22) wirkt.

11. Elektromotorischer Möbelantrieb nach Anspruch 10, bei dem die Spindelmutter (22) zusammen mit mindestens einem Lager (23) in einem Gehäuse (11) der Abtriebseinheit (10) angeordnet ist.

12. Elektromotorischer Möbelantrieb nach Anspruch 10 oder 11, bei dem die Abtriebseinheit (30) eine drehfeste Spindel (33) aufweist.

13. Möbel mit mindestens einem an einem Möbelbeschlag (1) befestigten bewegbaren Möbelteil, aufweisend einen elektromotorischen Möbelantrieb gemäß einem der Ansprüche 1 bis 12.

14. Möbel nach Anspruch 13, bei dem der Abstand (d_{A}, d_{B}) der Kraftangriffspunkte (A, B) am Möbelbeschlag (1) jeweils größer als 25 % und insbesondere größer als 50 % einer Breite des Möbelbeschlags (1) ist.

15. Möbel nach Anspruch 13 oder 14, bei dem die Verbindungselemente des elektromotorischen Möbelantriebs zur Verbindung mit einer quer im Möbelbeschlag (1) zwischen seitlichen Hebelwerken (3) verlaufenden Traverse (5) und/oder Drehtraverse (6) ausgebildet sind.

## Claims

1. An electromotive furniture drive, comprising a drive unit (10) and a power take-off unit (30) which can be moved relative to the drive unit (10), wherein the electromotive furniture drive further comprises two connection elements, of which at least one in each case is arranged at the drive unit (10) and at the moveable power take-off unit (30), and via which the drive unit (10) and at the moveable power take-off unit (30) are respectively connected with a cross member (5) or a rotating cross member (6) of a furniture fitting (1), **characterized in that** the connection elements provide at least two mutually spaced force application points (A, B) each for the connection with the furniture fitting (1) in a direction transversely to the relative movement between the drive unit (10) and the power take-off unit (30), wherein the force application points (A, B) are respectively spaced apart from one another at least by a distance (d_{A}, d_{B}) which is greater than approximately 50% of a travel of the furniture drive, and that the connection elements are designed such that they stiffen the cross member (5) concerning bending and the rotating cross member (6) concerning bending and torsion, respectively, wherein the travel of the furniture drive corresponds to the maximum possible displacement movement of the furniture drive.

2. An electromotive furniture drive according to claim 1, wherein the distance (d_{A}, d_{B}) of the force application points (A, B) is greater than 10 cm and in particular greater than 20 cm.

3. An electromotive furniture drive according to claim 1 or 2, wherein the connection between the drive unit (10) as well as the power take-off unit (30) and the furniture fitting (1) is frictionally engaged or interlocking.

4. An electromotive furniture drive according to claim 3, wherein the connection elements provide a releasable, in particular screwless connection.

5. An electromotive furniture drive according to claim 4, wherein one of the connection elements is arranged as a cross-strut (31) of the power take-off unit (30), wherein spaced half-shell-shaped clamps (36) or clips (39) and/or cable ties (38) are provided for connection with the cross member (5) of the furniture fitting (1).

6. An electromotive furniture drive according to claim 4 or 5, wherein two spaced swivel levers (15) are provided as connection elements.

7. An electromotive furniture drive according to claim 6, wherein the swivel levers (15) are connectable in a torsion-proof manner to the rotating cross member (6) of the furniture fitting (1).

8. An electromotive furniture drive according to claim 6 or 7, wherein the swivel levers (15) are arranged via swivel joints (14) on extension arms (12) of the drive unit (10).

9. An electromotive furniture drive according to claim 6 or 7, wherein the swivel levers (15) are arranged via swivel joints (14) on a cross-strut (31) of the power take-off unit (30).

10. An electromotive furniture drive according to one of the claims 1 to 9, wherein the drive unit (10) comprises a motor (20) which acts via a worm (21) on a rotatably mounted spindle nut (22).

11. An electromotive furniture drive according to claim 10, wherein the spindle nut (22) is arranged together with at least one bearing (23) in a housing (11) of the power take-off unit (10).

12. An electromotive furniture drive according to claim 10 or 11, wherein the power take-off unit (30) comprises a torsion-proof spindle (33).

13. A piece of furniture, comprising at least one movable furniture part which is fixed to a furniture fitting (1) having an electromotive furniture drive according to one of the claims 1 to 12.

14. A piece of furniture according to claim 13, wherein the distance (d_{A}, d_{B}) of the force application points (A, B) at the furniture fitting (1) is respectively greater than 25% and in particular greater than 50% of a width of the furniture fitting (1).

15. A piece of furniture according to claim 13 or 14, wherein the connection elements of the electromotive furniture drive are arranged for the connection with a cross member (5) and/or rotating cross member (6) extending transversely in the furniture fitting (1) between lateral lever mechanisms (3).

## Revendications

1. Entraînement de meuble à moteur électrique avec une unité d'entraînement (10) et une unité de sortie mobile (30) par rapport à l'unité d'entraînement (10), lequel entraînement de meuble à moteur électrique présente en outre au moins deux éléments de liaison dont au moins un est disposé sur l'unité d'entraînement (10) et un autre sur l'unité de sortie mobile (30), par lequel l'unité d'entraînement (10) et l'unité de sortie mobile (30) peuvent être reliées à une traverse (5) ou une traverse pivotante (6) d'une ferrure de meuble (1), **caractérisé en ce que** les éléments de liaison fournissent, dans une direction transversale par rapport au mouvement relatif entre l'unité d'entraînement (10) et l'unité de sortie mobile (30), au moins deux points d'application de la force (A, B) distants l'un de l'autre pour la liaison avec la ferrure de meuble (1), les points d'application de la force (A, B) étant distants l'un de l'autre d'au moins une distance (dA, dB) plus grande qu'environ 50 % d'une course de translation de l'entraînement de meuble, et **en ce que** les éléments de liaison sont conformés pour raidir la traverse (5) en flexion et la traverse pivotante (6) en flexion et en torsion, la course de translation de l'entraînement de meuble correspondant à la longueur d'une translation maximale de l'entraînement de meuble.

2. Entraînement de meuble à moteur électrique selon la revendication 1, dans lequel la distance (dA, dB) des points d'application de la force (A, B) est supérieure à 10 cm et en particulier supérieure à 20 cm.

3. Entraînement de meuble à moteur électrique selon la revendication 1 ou 2, dans lequel la liaison entre l'unité d'entraînement (10) ou l'unité de sortie (30) et la ferrure de meuble (1) se fait par friction ou correspondance de forme.

4. Entraînement de meuble à moteur électrique selon la revendication 3, dans lequel les éléments de liaison créent une liaison pouvant être défaite, en particulier sans vissage.

5. Entraînement de meuble à moteur électrique selon la revendication 4, dans lequel l'un des éléments de liaison est conformé comme une traverse transversale (31) de l'unité de sortie (30), des pinces (36) en forme de demi-coques ou des clips (39) et/ou des serre-câbles (38) étant prévus pour la liaison avec la traverse (5) de la ferrure de meuble (1).

6. Entraînement de meuble à moteur électrique selon la revendication 4 ou 5, dans lequel deux leviers pivotants (15) écartés sont prévus comme éléments de liaison.

7. Entraînement de meuble à moteur électrique selon la revendication 6, dans lequel les leviers pivotants (15) peuvent être reliés de manière solidaire en rotation à la traverse pivotante (6) de la ferrure de meuble (1) au moyen de tendeurs (16).

8. Entraînement de meuble à moteur électrique selon la revendication 6 ou 7, dans lequel les leviers pivotants (15) sont disposés sur des bras (12) de l'unité d'entraînement (10) par l'intermédiaire d'articulations rotatives (14).

9. Entraînement de meuble à moteur électrique selon la revendication 6 ou 7, dans lequel les leviers pivotants (15) sont disposés sur une traverse transversale (31) de l'unité de sortie (30) par l'intermédiaire d'articulations rotatives (14).

10. Entraînement de meuble à moteur électrique selon l'une des revendications 1 à 9, dans lequel l'unité d'entraînement (10) présente un moteur (20) qui agit par l'intermédiaire d'une vis sans fin (21) sur un écrou de broche (22) supporté avec possibilité de rotation.

11. Entraînement de meuble à moteur électrique selon la revendication 10, dans lequel l'écrou de broche (22) est disposé avec au moins un palier (23) dans un boîtier (11) de l'unité de sortie (10).

12. Entraînement de meuble à moteur électrique selon la revendication 10 ou 11, dans lequel l'unité de sortie (30) comporte une broche (33) fixe en rotation.

13. Meuble avec au moins une partie de meuble mobile fixée sur une ferrure de meuble (1), présentant un entraînement de meuble à moteur électrique selon l'une des revendications 1 à 12.

14. Meuble selon la revendication 13, dans lequel la distance (dA, dB) entre les points d'application de la force (A, B) sur la ferrure de meuble (1) est supérieure à 25 % et en particulier supérieure à 50 % d'une largeur de la ferrure de meuble (1).

15. Meuble selon la revendication 13 ou 14, dans lequel les éléments de liaison de l'entraînement de meuble à moteur électrique sont conçus pour une liaison avec une traverse (5) et/ou ou une traverse pivotante (6) passant transversalement dans la ferrure de meuble (1) entre des dispositifs de leviers latéraux (3).
